(19) Europäisches Patentamt
European Patent Office
Office européen des brevets

(11) **EP 4 611 322 A1**

(12) **EUROPEAN PATENT APPLICATION**
published in accordance with Art. 153(4) EPC

(43) Date of publication:
**03.09.2025  Bulletin 2025/36**

(21) Application number: **22964737.5**

(22) Date of filing: **08.11.2022**

(51) International Patent Classification (IPC):
*H04L 27/00* (2006.01)    *H04W 16/14* (2009.01)
*H04W 72/04* (2023.01)

(52) Cooperative Patent Classification (CPC):
**H04L 27/00; H04W 16/14; H04W 72/04**

(86) International application number:
**PCT/CN2022/130716**

(87) International publication number:
**WO 2024/098262 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **ZHOU, Mingyue
  Shenzhen, Guangdong 518129 (CN)**
• **WANG, Lei
  Shenzhen, Guangdong 518129 (CN)**
• **XU, Xiuqiang
  Shenzhen, Guangdong 518129 (CN)**

(74) Representative: **Thun, Clemens
  Mitscherlich PartmbB
  Patent- und Rechtsanwälte
  Karlstraße 7
  80333 München (DE)**

(54) **COMMUNICATION METHOD AND APPARATUS, COMPUTER-READABLE STORAGE MEDIUM, AND PROGRAM PRODUCT**

(57)    Disclosed embodiments provide a communication method and apparatus, a computer-readable storage medium, and a computer program product. In the method, when a first communication apparatus determines that a first resource set used by a grant-based first terminal device for uplink transmission overlaps with a second resource set used by a grant-free second terminal device for uplink transmission, the first communication apparatus determines, based on grant-free configuration information of the second terminal device, first precoding information to be used by the first terminal device to perform uplink transmission, and outputs the first precoding information. In this way, according to embodiments of this disclosure, a problem of a resource collision between different transmission mechanisms can be resolved, interference between user equipments in the different transmission mechanisms can be controlled, invalid sacrifice of transmission resources of the user equipments in the different transmission mechanisms can be avoided, and resource utilization can be improved.

FIG. 10

## Description

## TECHNICAL FIELD

This disclosure generally relates to the telecommunications field, and more specifically, to a communication method and apparatus, a computer-readable storage medium, and a computer program product.

## BACKGROUND

A common transmission mechanism is that when a user needs to perform transmission of a service by occupying a physical layer channel resource, the user sends a request to a base station, and the base station allocates, based on the request, the physical layer channel resource to the user for transmission, for example, a scheduling-based transmission mechanism. Another transmission mechanism is that a base station side pre-configures a physical layer channel resource for a user and notifies the user, and when the user needs to perform transmission, the user may perform transmission on the pre-configured physical layer channel resource, for example, a transmission mechanism based on scheduling-free pre-configuration. When a channel resource is limited, the two transmission mechanisms need to be coordinated.

## SUMMARY

This application provides a communication method, a communication apparatus, a computer-readable storage medium, and a computer program product, to resolve a problem of a resource collision between different transmission mechanisms, control interference between user equipments in the different transmission mechanisms, avoid invalid sacrifice of transmission resources of the user equipments in the different transmission mechanisms, and improve resource utilization.

According to a first aspect, a communication method is provided. The method may be performed by a first communication apparatus, or may be performed by a chip used in the first communication apparatus. The following is described by using an example in which the method is performed by the first communication apparatus. In the method, when the first communication apparatus determines that a first resource set used by a grant-based first terminal device for uplink transmission overlaps with a second resource set used by a grant-free second terminal device for uplink transmission, the first communication apparatus determines, based on grant-free configuration information of the second terminal device, first precoding information to be used by the first terminal device to perform uplink transmission. The first communication apparatus outputs the first precoding information. In this manner, a problem of a collision between different transmission mechanisms is resolved, interference between user equipments in the different transmission mechanisms is controlled, invalid sacrifice of transmission resources of the user equipments in the different transmission mechanisms is avoided, and resource utilization is improved.

In some implementations, assuming that the overlapping does not exists, the first communication apparatus determines second precoding information to be used by the first terminal device to perform uplink transmission. The first communication apparatus outputs the second precoding information. In this manner, the first precoding information can be enabled to act, only for an overlapping area, on signal transmitting, and conventional second precoding information can still be enabled to act, for a non-overlapping area, on the signal transmitting, so that a resource collision between different transmission mechanisms is avoided during signal transmitting based on different precoding information.

In some implementations, the outputting the second precoding information includes one of the following: The first communication apparatus outputs the second precoding information by using signaling for outputting the first precoding information; or the first communication apparatus outputs the second precoding information by using signaling different from signaling for outputting the first precoding information. In this manner, different precoding information may be sent in a flexible manner.

In some implementations, the determining first precoding information includes: The first communication apparatus determines an overlapping area in the first resource set based on a time-frequency position of the second resource set; and the first communication apparatus determines the first precoding information for the overlapping area. In this manner, the precoding information different from that used for a non-overlapping area is used for the overlapping area, to avoid a resource collision between GB and GF.

In some implementations, the determining an overlapping area includes: The first communication apparatus determines that the first resource set also overlaps with a third resource set of a grant-free third terminal device; and the first communication apparatus determines an overlapping area set in the first resource set based on the time-frequency position of the second resource set and a time-frequency position of the third resource set, where the overlapping area belongs to the overlapping area set. In this manner, the overlapping area set may be determined for different grant-free-based user equipment groups, to help the grant-based first terminal device maximize a spatial avoidance effect.

In some implementations, the method further includes: The first communication apparatus determines a first precoding information set used for each overlapping area in the overlapping area set, where the first precoding information belongs to the first precoding information set. In this way, the first precoding information set is determined for different grant-free-based user equipment groups, and the first precoding information in the first precoding information set is delivered to a grant-based user equipment, to control interference between a grant-free-based user equipment and the grant-based user equipment, avoid invalid sacrifice of a transmission resource of a user, and improve resource utilization.

In some implementations, the outputting the first precoding information includes: sending the first precoding information set to the first terminal device; and sending indication information to the first terminal device, where the indication information indicates an overlapping area corresponding to each piece of first precoding information in the first precoding information set. In this manner, the signaling for the first precoding information may be compressed by using system configuration information, to reduce a signaling data amount.

In some implementations, the indication information includes at least one of the following: position information of a time-frequency resource corresponding to the overlapping area; or an index of a time-frequency resource corresponding to the overlapping area. In this manner, specific information of an area position is not sent, and only the corresponding index needs to be sent, thereby implementing signaling compression.

In some implementations, the determining first precoding information includes: The first communication apparatus determines, in an uplink transmission codebook set based on the grant-free configuration information of the second terminal device, a codebook used by the second terminal device; the first communication apparatus determines, in the uplink transmission codebook set, another codebook different from the codebook; and the first communication apparatus determines the first precoding information based on the another codebook. In this manner, the first precoding information is determined based on the codebook.

In some implementations, the determining first precoding information includes: The first communication apparatus receives a non-codebook weight determined by the first terminal device and a non-codebook weight determined by the second terminal device; and the first communication apparatus determines the first precoding information based on the non-codebook weight that is determined by the first terminal device and that enables a correlation between an equivalent channel factor of the first terminal device and an equivalent channel factor of the second terminal device to be minimum. In this manner, the precoding information is determined based on the non-codebook.

In some implementations, the first precoding information is hybrid precoding information obtained by applying a weight to the second precoding information. The outputting the first precoding information includes: The first communication apparatus sends the weight to the first terminal device; and the first communication apparatus sends indication information to the first terminal device, where the indication information indicates that the first precoding information is the hybrid precoding information. In this manner, the hybrid precoding information into which the two types of precoding information are combined is indicated to the first terminal device.

In some implementations, the method further includes: Before the first terminal device performs uplink transmission, if the first communication apparatus detects a change of a resource set that overlaps with the first resource set, the first communication apparatus updates, based on grant-free configuration information of a terminal device corresponding to a changed resource set, the first precoding information to be used by the first terminal device to perform uplink transmission, where the changed resource set includes one of the following: an updated second resource set; a resource set including the second resource set and the third resource set that is of the grant-free third terminal device and that also overlaps with the first resource set; or a resource set including the third resource set and an updated second resource set; and the first communication apparatus outputs updated first precoding information. In this manner, the first precoding information can be refreshed in a timely manner based on actual scheduling and collision statuses, to ensure minimum avoidance sacrifice of the grant-based terminal device.

In some implementations, the updating the first precoding information includes: The first communication apparatus updates the overlapping area set in the first resource set based on a time-frequency position of the changed resource set, where the overlapping area belongs to the overlapping area set; and the first communication apparatus determines the updated first precoding information based on an updated overlapping area set. The overlapping area set can be refreshed in a timely manner based on actual scheduling and collision statuses, to accurately update the first precoding information in a timely manner, so that minimum avoidance sacrifice of the grant-based terminal device is ensured.

In some implementations, the method further includes: Before the first terminal device performs uplink transmission, if the first communication apparatus detects that the uplink transmission of the second terminal device is canceled, the first communication apparatus sends, to the first terminal device, indication information indicating that the first precoding information is invalidated. When transmission of a grant-free-based terminal device is canceled, the first precoding information can be refreshed in a timely manner, thereby ensuring minimum avoidance sacrifice of the grant-based terminal device.

According to a second aspect, a communication method is provided. For beneficial effects, refer to the descriptions in the second aspect. Details are not described herein again. The method may be performed by a grant-based second communication apparatus, or may be performed by a chip used in the second communication apparatus. The following is described by using an example in which the method is performed by the second communication apparatus. In the method, the grant-based second communication apparatus receives indication information from a network device, where the indication information indicates first precoding information, and the first precoding information is determined when a first resource set used by the second communication apparatus for uplink transmission overlaps with a second resource set used by a grant-free third communication apparatus for uplink transmission. The second communication apparatus performs uplink transmission based on the first precoding information.

In some implementations, the first precoding information is determined based on grant-free configuration information of the third communication apparatus.

In some implementations, the indication information further indicates an overlapping area that is in the first resource set and that corresponds to the first precoding information.

In some implementations, the performing uplink transmission includes: In the overlapping area, the second communication apparatus performs uplink transmission by using the first precoding information.

In some implementations, the method further includes: The second communication apparatus receives second precoding information from the network device; and
in a non-overlapping area in the first resource set other than the overlapping area, the second communication apparatus performs uplink transmission by using the second precoding information.

In some implementations, the indication information further indicates that the first precoding information is hybrid precoding information obtained by applying a weight to the second precoding information; and the indication information indicates the first precoding information by indicating the weight.

In some implementations, the receiving second precoding information includes: The second communication apparatus receives the second precoding information by using signaling for receiving the first precoding information or other signaling.

In some implementations, the method further includes: Before performing uplink transmission, the second communication apparatus receives updated overlapping precoding information and indication information of a corresponding updated overlapping area from the network device; and the second communication apparatus performs uplink transmission in the updated overlapping area based on the updated overlapping area.

In some implementations, the indication information includes at least one of the following: position information of a time-frequency resource corresponding to the overlapping area; or an index of a time-frequency resource corresponding to the overlapping area.

In some implementations, the method further includes: Before performing uplink transmission, the second communication apparatus receives indication information indicating that the first precoding information is invalidated; and in the overlapping area, the second communication apparatus performs uplink transmission by using the second precoding information.

According to a third aspect, a first communication apparatus is provided. For beneficial effects, refer to the descriptions in the first aspect. Details are not described herein again. The first communication apparatus has a function of implementing behavior in the method instance in the first aspect. The function may be implemented by hardware, or may be implemented by executing corresponding software by hardware. The hardware or the software includes one or more modules corresponding to the foregoing function. In a possible design, when the first communication apparatus includes: a processing unit, configured to: if determining that a first resource set used by a grant-based first terminal device for uplink transmission overlaps with a second resource set used by a grant-free second terminal device for uplink transmission, determine, based on grant-free configuration information of the second terminal device, first precoding information to be used by the first terminal device to perform uplink transmission; and an output unit, configured to output the first precoding information.

According to a fourth aspect, a second communication apparatus is provided. For beneficial effects, refer to the descriptions in the first aspect. Details are not described herein again. The apparatus has a function of implementing the behavior in the method instance in the second aspect. The function may be implemented by hardware, or may be implemented by executing corresponding software by hardware. The hardware or the software includes one or more modules corresponding to the foregoing function. In a possible design, the second communication apparatus includes: a receiving unit, configured to receive indication information from a network device, where the indication information indicates first precoding information, and the first precoding information is determined when a first resource set used by the second communication apparatus for uplink transmission overlaps with a second resource set used by a grant-free third communication apparatus for uplink transmission; and a transmission unit, configured to perform uplink transmission based on the first precoding information.

According to a fifth aspect, a communication apparatus is provided, and includes a processor and a memory storing instructions. When the instructions are executed by the processor, any method according to the first aspect and the implementations of the first aspect is performed.

According to a sixth aspect, a communication apparatus is provided, and includes a processor and a memory storing instructions. When the instructions are executed by the processor, any method according to the second aspect and the implementations of the second aspect is performed.

According to a seventh aspect, a computer-readable storage medium is provided. The computer-readable storage medium stores instructions, and when the instructions are executed, the method performed by the first communication apparatus or the second communication apparatus in the foregoing aspects is performed.

According to an eighth aspect, a computer program product is provided. The computer program product includes instructions, and when the instructions are executed by an electronic device, the method performed by the first communication apparatus or the second communication apparatus in the foregoing aspects is performed.

According to a ninth aspect, this application provides a chip system. The chip system includes a processor, configured to implement a function of the first communication apparatus or the second communication apparatus in the methods in the foregoing aspects. In a possible design, the chip system further includes a memory, configured to store program instructions and/or data. The chip system may include a chip, or may include a chip and another discrete component.

According to a tenth aspect, this application further provides a communication system, including a first communication apparatus configured to perform the method in the first aspect, or a second communication apparatus configured to perform the method in the second aspect and a third communication apparatus in the second aspect.

## BRIEF DESCRIPTION OF DRAWINGS

FIG. 1 is a diagram of a communication system according to an embodiment of this disclosure;

FIG. 2 is a schematic flowchart of an example of a communication method according to an embodiment of this disclosure;

FIG. 3 is a diagram of collisions between a time-frequency resource of a GB user equipment and time-frequency resources of GF user equipment groups according to an embodiment of this disclosure;

FIG. 4 is a diagram of collision area division according to some embodiments of this disclosure;

FIG. 5 is a diagram of collision area division according to some other embodiments of this disclosure;

FIG. 6 is a diagram of collision area division according to still some other embodiments of this disclosure;

FIG. 7 is a schematic flowchart of communication according to some embodiments of this disclosure;

FIG. 8 is a schematic flowchart of communication according to some other embodiments of this disclosure;

FIG. 9 is a schematic flowchart of communication according to still some other embodiments of this disclosure;

FIG. 10 is a flowchart of implementation at a first communication apparatus according to some embodiments of this disclosure;

FIG. 11 is a flowchart of implementation at a grant-based second communication apparatus according to some embodiments of this disclosure;

FIG. 12 is a simplified block diagram of an example device in a possible implementation according to an embodiment of this disclosure; and

FIG. 13 is a simplified block diagram of an example device in a possible implementation according to an embodiment of this disclosure.

## DESCRIPTION OF EMBODIMENTS

The following describes embodiments of this disclosure in more detail with reference to accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "include" and similar terms thereof should be understood as open inclusions, that is, "include but not limited to". The term "based on" should be understood as "at least partially based on". The term "an embodiment" or "the embodiment" should be understood as "at least one embodiment". The terms "first", "second", and the like may indicate different objects or a same object. The following may further include other explicit and implicit definitions.

Embodiments of this disclosure may be implemented according to any proper communication protocol, including but not limited to cellular communication protocols such as 4th generation (4G), 5th generation (5G), and future (for example, 6th generation (6G)) communication protocols, a wireless local area network communication protocol like the institute of electrical and electronics engineers (Institute of Electrical and Electronics Engineers, IEEE) 802.11 (for example, Wi-Fi7 and Wi-Fi8), and/or any other protocol currently known or developed in the future.

Technical solutions in embodiments of this disclosure are applied to a communication system that complies with any proper communication protocol, for example, a general packet radio service (General Packet Radio Service, GPRS), a global system for mobile communications (Global System for Mobile communications, GSM), an enhanced data rate for GSM evolution (Enhanced Data rate for GSM Evolution, EDGE) system, a universal mobile telecommunications system (Universal Mobile Telecommunications Service, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronization Code Division Multiple Access, TD-SCDMA) system, a frequency division duplex (Frequency Division Duplex, FDD) system, time division duplex (Time Division Duplex, TDD), a 5th generation (5G) system (for example, new radio (New Radio, NR)), and a future communication system (for example, a 6th generation (6G) system). Specifically, the technical solutions in embodiments of this disclosure may be used for any network in which a pre-scheduling mode exists.

For illustration, the following describes embodiments of this disclosure in the context of the 5G communication system in the 3GPP. However, it should be understood that embodiments of this disclosure are not limited to the communication system, but may be applied to any communication system having a similar problem, for example, a wireless local area network (WLAN), a wired communication system, or another communication system developed in the future.

The term "terminal" or "terminal device" used in this disclosure is any terminal device that can perform wired or wireless communication with a network device or between terminal devices. The terminal device may be sometimes referred to as a user equipment (User Equipment, UE). The terminal device may be any type of mobile terminal, fixed terminal, or portable terminal. The terminal device may be various wireless communication devices that have a wireless communication function. With emergence of an internet of things (Internet of Things, IoT) technology, increasing devices that previously have no communication function, for example, but not limited to, a household appliance, a transportation tool, a tool device, a service device, and a service facility, start to obtain a wireless communication function by being configured with wireless communication units, to access a wireless communication network, and accept remote control. Such devices have the wireless communication function because the devices are configured with the wireless communication units, and therefore also belong to a scope of wireless communication devices. For example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a wireless data card, a wireless modem (Modulator demodulator, Modem), a positioning device, a radio broadcast receiver, an e-book device, a game device, an internet of things (Internet of Things, IoT) device, a vehicle-mounted device, a flight vehicle, a virtual reality (Virtual Reality, VR) device, an augmented reality (Augmented Reality, AR) device, a wearable device (for example, a smartwatch), a terminal device in a 5G network or any terminal device in an evolved public land mobile network (Public Land Mobile Network, PLMN), another device that can be used for communication, or any combination thereof. This is not limited in embodiments of this disclosure.

The term "network node" or "network device" used in this disclosure is an entity or a node that may be configured to communicate with the terminal device, for example, may be an access network device. The access network device may be an apparatus that is deployed in a radio access network and that provides a wireless communication function for a mobile terminal. For example, the access network device may be a radio access network (Radio Access Network, RAN) network device. The access network device may include various types of base stations. The base station is configured to provide a wireless access service for the terminal device. Specifically, each base station corresponds to a service coverage area. A terminal device entering the area may communicate with the base station by using a radio signal, to receive the radio access service provided by the base station. Service coverage areas of the base stations may overlap, and a terminal device in an overlapping area may receive radio signals from a plurality of base stations. Therefore, the plurality of base stations may simultaneously provide services for the terminal device. Based on a magnitude of a provided service coverage area, the access network device may include a macro base station for providing a macro cell (Macro cell), a micro base station for providing a micro cell, a pico base station for providing a pico cell (Pico cell), and a femto base station for providing a femto cell (Femto cell). In addition, the access network device may further include various forms of relay stations, access points, remote radio units (Remote Radio Units, RRUs), radio heads (Radio Heads, RHs), remote radio heads (Remote Radio Heads, RRHs), and the like. In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in the 5G network. In some scenarios, the access network device may include a central unit (Central Unit, CU) and/or a distributed unit (Distributed Unit, DU). The CU and DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a rack. For ease of description, in subsequent embodiments of this disclosure, the foregoing apparatuses that provide a wireless communication function for the mobile terminal are collectively referred to as the network device. The apparatus may alternatively be a chip or a module that is in the mobile terminal or the access network device and that implements a related wireless communication function. This is not specifically limited in embodiments of this disclosure.

Because overall channel resources are limited, allocated physical layer channel resources of a first transmission mechanism (for example, GB) and a second transmission mechanism (for example, GF) may overlap (overlap), and the overlapping is also referred to as a collision (Collision). In other words, a user equipment (for example, a GB user equipment) based on the first transmission mechanism and a user equipment (for example, a GF user equipment) based on the second transmission mechanism simultaneously perform data transmission on one channel resource.

The Grant Base (referred to as GB for short) transmission mechanism is a mechanism in which when a user equipment needs to perform transmission of a service by occupying a physical layer channel resource for transmission, the user equipment sends a request to a base station. The base station allocates, based on the request, the physical layer channel resource to the user equipment for transmission. NR is used as an example. A physical layer channel resource allocated by a network side to the GB user equipment is a time domain-frequency domain two-dimensional resource that is based on OFDM/DFT-S-OFDM. The Grant Free (configured without grant, referred to as GF for short) transmission mechanism is a mechanism in which a base station side pre-configures a physical layer channel resource for a user equipment and notifies the user equipment, and when the user equipment needs to perform transmission, the user equipment needs to perform transmission only on the pre-configured physical layer channel resource. This can reduce transmission latency of the user equipment and reduce signaling overheads, and is suitable for a short-latency service and a service with a periodic attribute. Configured Grant transmission mechanisms (Configured Grant Type 1 and Configured Grant Type 2) in an NR protocol belong to this type of transmission solution. Because the overall channel resources are limited, the allocated physical layer channel resources of the GF and the GB may overlap (overlap), and the overlapping is also referred to as the collision (Collision). In other words, the GF user equipment and the GB user equipment simultaneously perform data transmission on one channel resource. How to ensure a minimum service loss in the two transmission mechanisms when the foregoing resource collision occurs is one of problems that need to be considered for a network. An overlapping channel resource may be defined as a collision area, and a non-overlapping channel resource may be defined as a non-collision area.

A collision resolution solution is that the base station (gNB) allocates a time-frequency resource to a Grant Base UE 1 user equipment for bearing an uplink PUSCH channel of the Grant Base UE 1, and the base station also periodically allocates a time-frequency resource to a Grant Free UE 2 for sending uplink service data by the Grant Free UE 2. When the UE 2 performs sending, a resource collision occurs between the UE 2 and the UE 1 in some time-frequency areas. To ensure transmission of a target user, a solution in which transmit power of the target user is increased, and transmit power of a non-target user equipment is reduced is used. If the target user equipment is the GF user equipment, the GF user equipment performs transmission at high power, and the GB user equipment performs transmission at low power. If the target user equipment is the GB user equipment, the GB user equipment performs transmission at high power, and the GF user equipment performs transmission at low power. In this solution, power between users is adjusted. This reduces interference to the target user equipment is reduced, but cannot completely cancel the interference. A powerful receiver solution, like IC, is needed on the base station side to finally reduce the interference to the target user. For the non-target user equipment, because the transmit power is reduced, an SINR on a receiving side is reduced, and a performance loss of the non-target user equipment is greater.

Another collision resolution solution is that when a resource collision between GF and GB occurs, the base station side (gNB) delivers new signaling to the GB user equipment, to make the GB user equipment cancel signal transmission on a collision resource, in other words, active avoidance of the GB user equipment is used to ensure transmission reliability of the GF user equipment. In this case, the gNB can attempt to demodulate a GB service on a non-preempted resource, and if a CRC is correct, GB transmission succeeds. However, in this solution, transmission cancellation is beneficial to the target user equipment (the GF user equipment), but is unbeneficial to the non-target user equipment (the GB device). In addition, because the resource of the GF user equipment is pre-configured, and does not necessarily match a sending requirement of the GF user equipment, when the GF resource for sending takes effect, the GF user equipment performs no data transmission. In this case, the active avoidance sacrifice of the GB user equipment is invalid.

In embodiments of this disclosure, a problem of a resource collision (for example, the resource collision between the GB and the GF) between terminal devices based on different transmission mechanisms can be resolved, and problems, caused according to the foregoing solution, such as that the interference between the GF user equipment and the GB user equipment cannot be effectively controlled, and invalid sacrifice of the resources of the GF user equipment and GB user equipment can be resolved. To make objectives, technical solutions, and advantages of this application clearer, the following further describes this application in detail with reference to accompanying drawings. Specific operation methods, function descriptions, and the like in method embodiments may also be applied to apparatus embodiments or system embodiments.

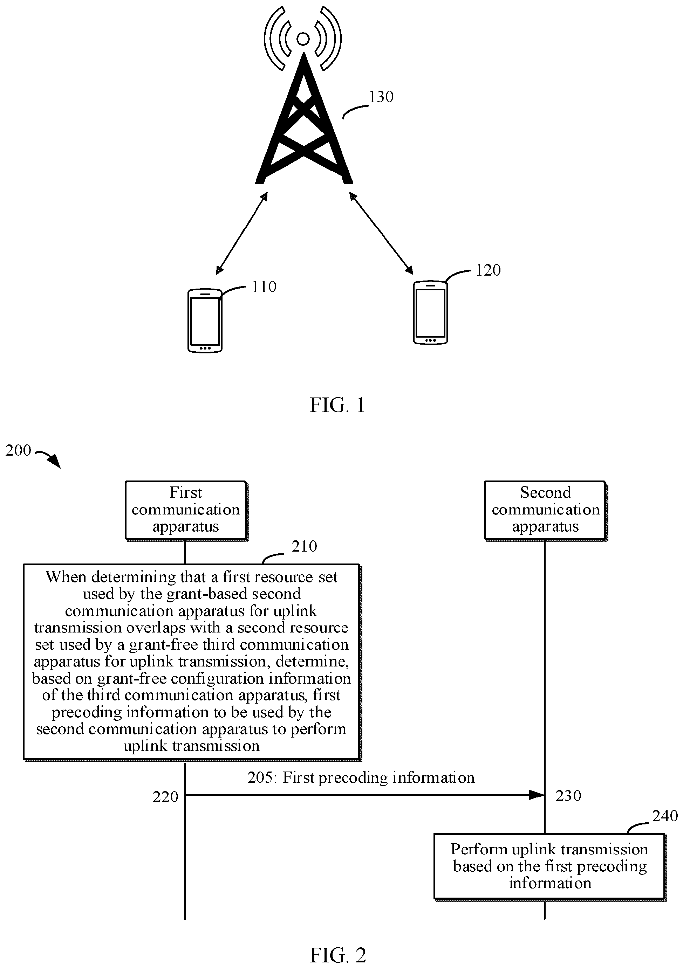

As shown in FIG. 1, a communication method provided in embodiments of this disclosure may be applied to a 5G NR system, or may be applied to another communication system, for example, a next generation (6G) communication system. Network elements in embodiments of this disclosure are mainly a network device 130 and terminal devices 110 and 120. In this scenario, the network device 130 is an entity configured to transmit or receive a signal on a network side. The network device 130 may be a base station, for example, a BS, a NodeB, an eNB, or a gNB. The terminal devices 110 and 120 are entities configured to receive or transmit signals on a user equipment side. The terminal devices 110 and 120 may be UEs (user equipments), for example, mobile phone terminals. Either of the terminal devices 110 and 120 may send a request to the network device 130, to request the base station to allocate a physical layer channel resource for transmission, or either of the terminal devices 110 and 120 may perform transmission based on a physical layer channel resource pre-configured by the network device 130. That is, either of the terminal devices 110 and 120 may be a GF user equipment or a GB user equipment. With reference to the scenario in this embodiment of this disclosure, the terminal devices 110 and 120 may be different types of user equipments. For example, the terminal device 110 is the GB user equipment and the terminal device 120 is the GF user equipment, or the terminal device 110 is the GF user equipment and the terminal device 120 is the GB user equipment In this case, a collision may occur between physical layer channel resources corresponding to the terminal devices 110 and 120. A relay device (not shown in FIG. 1) may be further mentioned. The relay device is an entity that can receive data from a terminal, a base station, or another relay, and forward the data to another terminal, the base station, or the another relay. A quantity of terminal devices and a quantity of network devices in embodiments of this disclosure are not limited by a quantity of devices listed above.

It should be understood that the network device 130 may be a network device in various network systems. For example, the network device 130 may be any device having a wireless transceiver function. The network device 130 includes but is not limited to the following: The network device 130 may be a conventional macro base station eNB (evolved NodeB) in a conventional UMTS/LTE (Universal Mobile Telecommunications System, universal mobile telecommunications system/Long Term Evolution, long term evolution) wireless communication system, may be a micro base station eNB in a HetNet (Heterogeneous Network, heterogeneous network) scenario, may be a baseband processing unit BBU (Base Band Unit, baseband unit) and a radio unit RRU (Remote Radio Unit, remote radio unit) in a distributed base station scenario, may be a baseband pool BBU pool and a radio unit RRU in a CRAN (Cloud Radio Access Network, cloud radio access network) scenario, may be a gNB in a future wireless communication system, a base station evolved subsequently in the 3GPP, an access node in a Wi-Fi system, a radio relay node, a radio backhaul node, and the like. The base station may be a macro base station, a micro base station, a pico base station, a small cell, a relay station, a balloon station, or the like. Alternatively, the network device 130 or 140 may be a server, a wearable device, a vehicle-mounted device, or the like.

The terminal devices 110 and 120 each may alternatively be various user communication devices, for example, may be a vehicle-mounted communication module or another embedded communication module, a mobile phone (mobile phone), a tablet computer (Pad), a computer having a wireless transceiver function, a virtual reality (VR) terminal device, an augmented reality (AR) terminal device, a wireless terminal in industrial control (industrial control), a tactile terminal device, a vehicle-mounted terminal device, a wireless terminal in self driving, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like.

FIG. 2 is a schematic flowchart of an example of a communication method according to an embodiment of this disclosure. As shown in FIG. 2, a procedure 200 of an example of a communication method according to some embodiments of this disclosure includes: When a first communication apparatus determines that a first resource set used by a grant-based second communication apparatus for uplink transmission overlaps with a second resource set used by a grant-free third communication apparatus for uplink transmission, the first communication apparatus determines (210), based on grant-free configuration information of the third communication apparatus, first precoding information 205 to be used by the second communication apparatus to perform uplink transmission; and the first communication apparatus outputs (220) the first precoding information 205. On a second communication apparatus side, the grant-based second communication apparatus receives (230) the first precoding information 205 from the first communication apparatus, and the second communication apparatus performs (240) uplink transmission based on the first precoding information 205.

In some embodiments, the grant-free third communication apparatus may be a grant-free communication apparatus group. In some embodiments, the grant-free third communication apparatus may be specifically a grant-free GF user equipment group.

In some embodiments, that the first communication apparatus outputs (220) the first precoding information 205 may be specifically sending the first precoding information 205 to the grant-based second communication apparatus. In some embodiments, that the grant-based second communication apparatus receives (230) the first precoding information 205 from the first communication apparatus may be specifically receiving, from the first communication apparatus, indication information indicating the first precoding information 205. In some embodiments, the indication information that is received by the second communication apparatus from the first communication apparatus and that indicates the first precoding information 205 may be determined when the first resource set used by the second communication apparatus for uplink transmission overlaps with the second resource set used by the grant-free third communication apparatus for uplink transmission.

In some embodiments, the indication information that is received by the second communication apparatus from the first communication apparatus and that indicates the first precoding information 205 may further indicate an overlapping area that is in the first resource set and that corresponds to the first precoding information 205. In some embodiments, in the overlapping area, the second communication apparatus performs uplink transmission by using the first precoding information 205.

In some embodiments, the first communication apparatus may be a network device, a chip located in the network device, or the like. In some embodiments, the second communication apparatus may be a first terminal device, a chip located in the first terminal device, or the like. In some embodiments, the third communication apparatus may be a second terminal device, a chip located in the second terminal device, or the like. For example, the network device may be a base station, and a terminal device (the first terminal device or the second terminal device) may be a UE (user equipment). It should be noted that the network device is not limited to the base station, and the terminal device is not limited to the UE. In some embodiments, the grant-based second communication apparatus (for example, the first terminal device) may be a GB user equipment. In some embodiments, the grant-free third communication apparatus (for example, the second terminal device) may be a GF user equipment.

An example in which the second communication apparatus is the first terminal device is used. In some embodiments, assuming that the overlapping does not exist, the first communication apparatus may further determine second precoding information to be used by the first terminal device to perform uplink transmission, and the first communication apparatus may output the second precoding information. In some embodiments, that the first communication apparatus may output the second precoding information may be specifically sending the second precoding information to the first terminal device. Correspondingly, at the first terminal device, the second precoding information is received from the first communication apparatus (for example, the network device). In some embodiments, in a non-overlapping area in the first resource set other than the overlapping area, the first terminal device may perform uplink transmission by using the second precoding information.

In some embodiments, the first communication apparatus outputs the second precoding information by using signaling for outputting the first precoding information 205. In some other embodiments, the first communication apparatus outputs the second precoding information by using signaling (that is, other signaling) different from signaling for outputting the first precoding information 205. In some embodiments, when the first communication apparatus sends the first precoding information 205 and the second precoding information to the second communication apparatus, correspondingly, the second communication apparatus may receive the second precoding information by using signaling for receiving the first precoding information 205 or other signaling.

In some embodiments, the first communication apparatus may determine the overlapping area in the first resource set based on a time-frequency position of the second resource set, and determine the first precoding information 205 for the overlapping area.

In some embodiments, the first communication apparatus may determine that the first resource set also overlaps with a third resource set of a grant-free third terminal device; and the first communication apparatus determines an overlapping area set in the first resource set based on the time-frequency position of the second resource set and a time-frequency position of the third resource set, where the overlapping area belongs to the overlapping area set.

In some embodiments, the grant-free third terminal device may be a grant-free terminal device group, for example, a GF user equipment group.

In some embodiments, the first communication apparatus may determine a first precoding information 205 set used for each overlapping area in the overlapping area set, where the first precoding information 205 belongs to the first precoding information 205 set.

In some embodiments, that the first communication apparatus outputs the first precoding information 205 may be specifically sending the first precoding information 205 set to the first terminal device, and sending, to the first terminal device, indication information indicating an overlapping area corresponding to each piece of first precoding information 205 in the first precoding information 205 set.

In some embodiments, the indication information indicating the overlapping area corresponding to each piece of first precoding information 205 in the first precoding information 205 set may include position information of a time-frequency resource corresponding to the overlapping area, an index of a time-frequency resource corresponding to the overlapping area, or both the position information and the index. Correspondingly, the first terminal device may determine a specific position of the overlapping area by using the position information of the time-frequency resource corresponding to the overlapping area, or the index of the time-frequency resource corresponding to the overlapping area.

The first communication apparatus may determine the first precoding information 205 in a plurality of solution designs: a codebook-based solution design; a non-codebook-based solution design; a solution design of hybrid precoding information; or the like. The following separately describes the solution designs. In some embodiments, a codebook-based design solution of the first precoding information 205 may be specifically that the first communication apparatus determines, in an uplink transmission codebook set based on grant-free configuration information of the second terminal device, a codebook used by the second terminal device, determines, in the uplink transmission codebook set, another codebook different from the codebook used by the second terminal device, and determines the first precoding information 205 based on the another codebook. For example, if the second terminal device uses a codebook, when the first communication apparatus determines the first precoding information 205, the first communication apparatus does not use the codebook that has been used by the second terminal device, but selects another codebook as the first precoding information 205 to send a signal. The another codebook is considered as a codebook that has a low correlation with information about the second terminal device.

In some embodiments, a non-codebook-based design solution of the first precoding information 205 may be specifically that the first communication apparatus receives a non-codebook weight determined by the first terminal device and a non-codebook weight determined by the second terminal device, and the first communication apparatus determines the first precoding information 205 based on the non-codebook weight that is determined by the first terminal device and that enables a correlation between an equivalent channel factor of the first terminal device and an equivalent channel factor of the second terminal device to be minimum. In this solution, the non-codebook weight determined through joint calculation based on information about the first terminal device and the second terminal device serves as the first precoding information 205. For a specific calculation process, refer to the following descriptions of Embodiment 1.

In some embodiments, a design solution of the hybrid precoding information is used. Specifically, the first precoding information 205 is the hybrid precoding information obtained by applying a weight to the second precoding information. That the first communication apparatus outputs the first precoding information 205 may be specifically sending the weight to the first terminal device, and sending, to the first terminal device, indication information indicating that the first precoding information 205 is the hybrid precoding information. In other words, the first communication apparatus may indicate the first precoding information 205 by indicating the weight. In some embodiments, the applying a weight to the second precoding information may be specifically multiplying the second precoding information by the weight. In some other embodiments, a specific manner of applying the weight may not be limited to multiplying the second precoding information by the weight.

In some embodiments, before the first terminal device performs uplink transmission, if the first communication apparatus detects a change of a resource set that overlaps with the first resource set, the first communication apparatus may update, based on grant-free configuration information of a terminal device corresponding to a changed resource set, the first precoding information 205 to be used by the first terminal device to perform uplink transmission, where the changed resource set may include one of the following: an updated second resource set; a resource set including the second resource set and the third resource set that is of the grant-free third terminal device and that also overlaps with the first resource set; or a resource set including the third resource set and an updated second resource set; and the first communication apparatus outputs updated first precoding information 205.

In some embodiments, the updated second resource set is specifically that the second resource set is updated. An example in which a grant-free second terminal device is the GF user equipment group is used. A resource set used by a first GF user equipment group for uplink transmission overlaps with a resource set used by the GB user equipment for uplink transmission. The overlapping resource set may be referred to as the second resource set. When uplink transmission of a part of GF user equipments (not all the GB user equipments) in the first GF user equipment group is canceled, the second resource set may be changed. For example, one or more resources that are of the GF user equipment and that originally overlap no longer overlap with a resource of the GB user, and correspondingly, the resources no longer belong to the second resource set. In this case, the second resource set is updated. In other words, resources are decreased in the resource set that overlaps with the resource set used by the GB user equipment for uplink transmission. The changed resource set includes the updated second resource set.

In some embodiments, for the resource set of the third resource set that is of the grant-free third terminal device and that also overlaps with the first resource set, refer to the foregoing example. For example, in addition to the first GF user equipment group, a second GF user equipment group also overlaps with the resource set used by the GB user equipment for uplink transmission. In this case, the overlapping resource set may be referred to as the third resource set. In other words, on the basis of the second resource set, the third resource set appears. In this case, resources are increased in the resource set that overlaps with the resource set used by the GB user equipment for uplink transmission. The changed resource set includes the resource set of the third resource set that is of the grant-free third terminal device and that also overlaps with the first resource set.

In some embodiments, the increase and the decrease of resources in the resource set that overlaps with the resource set used by the GB user equipment for uplink transmission may simultaneously occur, that is, the changed resource set may include the third resource set and a resource set of the updated second resource set.

In some embodiments, that the first communication apparatus updates the first precoding information 205 may be specifically updating the overlapping area set in the first resource set based on a time-frequency position of the changed resource set, where the overlapping area belongs to the overlapping area set, and determining the updated first precoding information 205 based on an updated overlapping area set.

In some embodiments, on the second communication apparatus side, before uplink transmission is performed, the second communication apparatus receives updated overlapping precoding information and indication information of a corresponding updated overlapping area from the network device, and may perform uplink transmission in the updated overlapping area based on the updated overlapping area.

In some embodiments, before the first terminal device (an example of the second communication apparatus) performs uplink transmission, if the first communication apparatus (for example, the network device) detects that the uplink transmission of the second terminal device (an example of the third communication apparatus) is canceled, the first communication apparatus sends, to the first terminal device, indication information indicating that the first precoding information 205 is invalidated. It should be noted that the second terminal device may be a grant-free terminal device group. For the grant-free terminal device group, that the uplink transmission of the second terminal device is canceled means that uplink transmission of all grant-free terminal devices in the group is canceled.

In some embodiments, on the second communication apparatus side (for example, the first terminal device), the indication information indicating that the first precoding information 205 is invalidated is received. In this case, in the overlapping area, uplink transmission may be performed by using the second precoding information.

An example in which the first communication apparatus is the base station, the second communication apparatus is the GB user equipment, and the third communication apparatus is the GF user equipment is used. In some embodiments, the base station determines a transmitting weight of the GB user equipment based on information about the GF user equipment, and delivers the transmitting weight to the GB user equipment by using signaling. The transmitting weight is the first precoding information 205 mentioned in the foregoing embodiments, and may be referred to as a weight for short. Through effective spatial beamforming of the transmitting weight, the GB user equipment may achieve the following: Through the beamforming, interference between the GB user equipment and the GF user equipment is reduced, and performance of both the GB user equipment and the GF user equipment can be improved.

In some embodiments, content of signaling for the weight delivered by the base station includes a quantity of delivered weights, and action position information (that is, the position information of the time-frequency resource corresponding to the overlapping area) of each delivered weight. A transmitting weight $V_{gb,i}$ corresponding to each action area indicates a transmitting weight in an $i^{th}$ area. Weights in different areas are different, so that the GB user equipment can maximize a spatial avoidance effect. For example, if resources of the GF user equipment and the GB user equipment do not collide, a default weight $V_{gb,1}$ is delivered. The default weight is the second precoding information mentioned in the foregoing embodiments, and is determined by GB scheduling information. If resources of the user equipment and the GB user equipment collide, a transmitting weight $V_{gb,i}$, of the collision area may be further delivered, and i indicates an $i^{th}$ collision area. Each collision area corresponds to a group of weights, and the transmitting weight corresponding to the collision area is the first precoding information 205.

In some embodiments, signaling for sending the weights in the different areas may be expressed in a form of combination of two sets of weights. A first set of weights $V_{gb,1}(i)$ (that is, the second precoding information, or referred to as the default weight) is determined based on known scheduling information of the GB user equipment. A second set of weights $V_{outer,i}$ (the first precoding information 205 in this example) is determined based on information about a GF user equipment in a collision area i.

In some embodiments, when the collision area i>1 (that is, the collision area exists), a real weight may be expressed as: $V_{gb,i} = V_{outer,i}V_{gb,1}(i)$, where the base station separately delivers indications of $V_{gb,1}(i)$ and $V_{outer,i}$, and $V_{gb,1}(i)$ is the default weight. This example is an example in which a weight is expressed to indicate the first precoding information 205, and $V_{outer,i}$ indicates the weight. This implementation form may be used to compress the signaling for the weight in some scenarios. For example, the transmitting weight $V_{gb,1}(i)$ in a scheduling area for the GB user is constant. In this case, there are numerous and discontinuous GF collision areas.

In some embodiments, weight information of the collision area may be compressed based on GF information configured by a system, and action position information of an originally delivered weight may be compressed as follows: Only a GF resource indication that is configured by the system and that corresponds to the weight needs to be transferred. Specifically, because a resource of the GF user equipment is pre-indicated by the system, the GB user equipment may determine, by using the GF resource indication configured by the system, that a specific resource collides with the resource of the GF user equipment. The GF resource indication may be, for example, in a form of a resource index of the collision area. The network device delivers the index to the GB user equipment, and the GB user equipment determines, based on the index, that a specific resource collides or specific resources collide, and delivers the GF resource indication (for example, the index), so that the signaling for the weight can be compressed by using the GF information configured by the system. In some embodiments, on a UE side, when detecting, through listening, that the signaling for the weight relies on a system message, a UE determines a transmitting weight in a corresponding area based on GF configuration information of the system and the GF resource indication to which current signaling for the weight points. Therefore, the UE may configure a transmitting weight in a system GF configuration resource area with reference to system GF configuration resource information broadcast by the gNB and the signaling for delivering the weight.

In some embodiments, the weights in the different areas may be aggregated and then delivered together, or may be delivered separately. Weights in a same area are allowed to be refreshed or canceled by using signaling delivered at different time, so that weight information can be refreshed in a timely manner based on actual scheduling and collision statuses, thereby ensuring minimum GB avoidance sacrifice.

In some embodiments, the UE (an example of the first terminal device) side may listen to signaling for delivering a weight by the network device, and perform an operation like configuring, refreshing, or canceling weight information of different areas based on content of the signaling. Therefore, the UE side may learn of weight adjustment statuses of the different areas on a gNB side in a timely manner based on listening behavior, and perform weight configuration, refreshing, or cancellation in a timely manner, to ensure minimum avoidance sacrifice of the GB user equipment.

In some embodiments, when detecting, through listening, that the signaling for the weight is in the form of combination of two sets of weights (that is, a case of the hybrid precoding information), the UE obtains a real transmitting weight (that is, the first precoding information 205 obtained through calculation on a GB user equipment side based on the second precoding information and the weight) through calculation based on an outer weight action area (that is, an overlapping area on which the first precoding information 205 acts), an outer weight (that is, the first precoding information 205 expressed in a form of the weight), and an original receiving inner weight (that is, the second precoding information). Therefore, the UE may configure a transmitting weight in an area based on the signaling for the weight delivered by the gNB (an example of the network device).

In some embodiments, when detecting, through listening, that an area weight is refreshed or canceled, the UE refreshes the area weight or restores the area weight to $V_{gb,1}$ based on signaling information of the weight. The UE side may learn of weight adjustment statuses of the different areas on a gNB side in a timely manner based on listening behavior, and perform weight refreshing or cancellation in a timely manner, to ensure minimum avoidance sacrifice of the GB user equipment.

In some embodiments, spatial beamforming may be used on the GB user equipment side to reduce interference of the collision area to the GF user equipment, so that the GB user equipment side and the GF user equipment can simultaneously perform transmission, to avoid invalid sacrifice. When a channel factor H of the GF/GB user equipment is known, a transmitted precoding scheme $V_{gb}$ of the GB user equipment is designed to satisfy:

$$W_{gf,i} H_{gb} V_{gb} \to 0$$

$H_{gb}$ indicates the channel factor of the GB user equipment, and $W_{gf,i}$ indicates a receiving matrix of an $i^{th}$ GF user equipment on a same time-frequency resource. When the foregoing formula is satisfied, an estimation signal is output as $i^{th}$ GF user equipment on a receiving side is:

$$\hat{S}_{gf,i} = W_{gf,i} H_{gf,i} S_{gf,i} + \sum_{\substack{j=1 \\ j \neq i}}^{N} b_j * H_{gf,j} S_{gf,j} + \tilde{n}_{gf,i}$$

In this case, the GB user equipment does not interfere with the GF user equipment, and it is expected that receiving performance of the GF user equipment is not affected. However, because the GB user equipment also sends specific information by using the collision area, the GB user equipment may have benefits. The gNB selects a properly designed $V_{gb}$ based on measurement information of the GF user equipment and the GB user equipment, and delivers the properly designed $V_{gb}$ to the GB UE (user equipment) in a timely manner. When the GB user equipment performs sending, interference caused by the GB user equipment to the GF user equipment is reduced by using $V_{gb}$. In addition, in the solution, the transmitted precoding scheme $V_{gb}$ of the GB UE in the collision area may be adjusted in a timely manner based on an actual scheduling situation of the GF user equipment, to avoid invalid sacrifice or a burst collision.

The following describes a transmitted precoding scheme design of the GB user equipment. $[z^{(p_0)}, ..., z^{(p_{p-1})}]$ is output after a signal $[y^{(0)}, ...y^{(v-1)}]$ is precoded as following:

$$\begin{bmatrix} z^{(p_0)} \\ \vdots \\ z^{(p_{p-1})} \end{bmatrix} = V \begin{bmatrix} y^{(0)} \\ \vdots \\ y^{(v-1)} \end{bmatrix}$$

V is the precoding scheme, and is a matrix related to a quantity of transmitted streams $v$ and a quantity of antennas $p_p$. As described above, the precoding scheme mentioned in this embodiment of this disclosure may also be referred to as the precoding information or the transmitting weight (which may be referred to as the weight for short). In this embodiment of the present invention, the transmitting weight V is defined as a precoding scheme that acts on a time-frequency resource in user-specific bandwidth, and a same transmitting weight is used for signals on different time domain resources in same bandwidth. V only describes an action frequency band area, and time domain description is omitted.

The following separately describes solutions in this embodiment of this application in detail by using specific embodiments.

Embodiment 1

Embodiment 1 may be used for a phase of processing GB scheduling. A gNB modifies a transmitting weight of a GB user equipment in a collision area based on known GF information, and delivers a modified transmitting weight to the GB user equipment.

On a base station side, in step 1, when determining the transmitting weight of the GB user equipment, a base station first determines a transmitting weight $V_{gb,1}$, of a UE under a non-collision assumption, and the transmitting weight $V_{gb,1}$, of the UE is defined as a first weight. The first weight is enabled to act on full bandwidth of the GB user. The first weight is determined based on scheduling information of the GB user equipment, and is irrelevant to information about a GF user equipment. The first weight may be a TPMI (Transmitted Precoding Matrix Indicator, transmitted precoding matrix indicator) weight based on an uplink codebook (codebook), or may be a weight based on a non-codebook (non-codebook). The first weight may be an example of second precoding information.

Step 2: The base station monitors whether a GF/GB collision (to be specific, a resource collision between the GF user equipment and the GB user equipment) occurs; and if the collision has occurred, the base station determines a transmitting weight $V_{gb,2}$ in the collision area based on scheduling-free information of the GF user, and the transmitting weight $V_{gb,2}$ in the collision area is defined as a second weight; or if the collision does not occur, step 3 in Embodiment 1 is performed. The second weight may be an example of first precoding information.

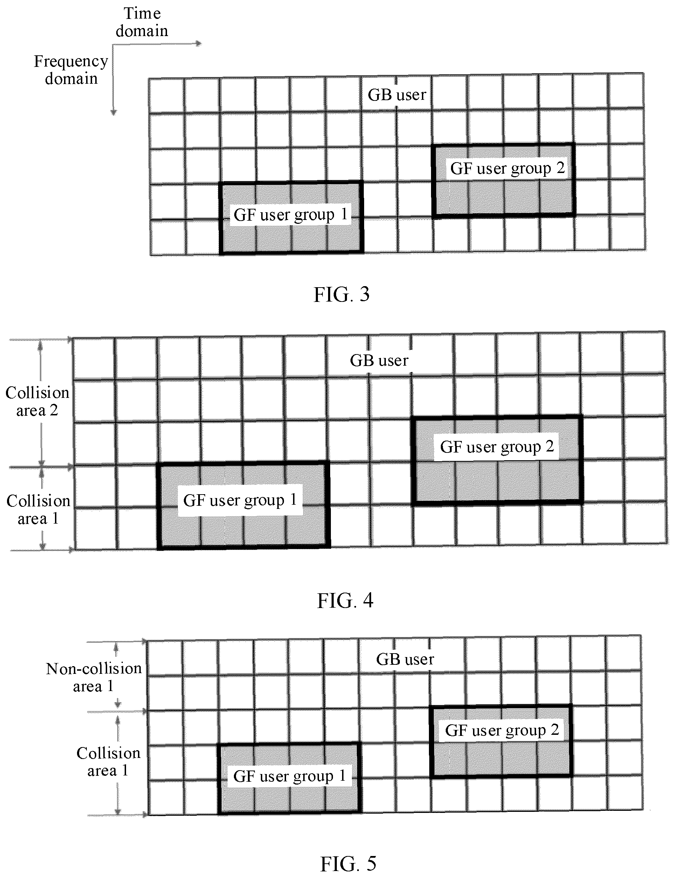

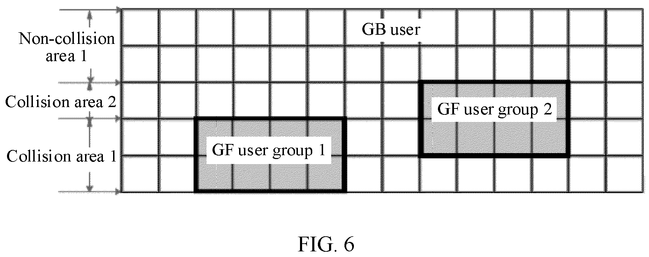

Based on a GF/GB collision status in frequency domain, the base station divides bandwidth of the GB user equipment into several collision areas (that is, overlapping areas) and non-collision areas (that is, non-overlapping areas). At least one GB/GF collision is covered in a frequency band of the collision area, and no GF/GB collision is covered in bandwidth of the non-collision area. FIG. 3 is used as an example. Collisions from two GF user equipment groups are encountered on a time-frequency resource of the GB user equipment, and are respectively located on different time-frequency resources. In some embodiments, all areas of the GB user equipment may be divided into collision areas, and there is no non-collision area. For example, the areas may be divided into two collision areas, as shown in FIG. 4. In some other embodiments, all areas of the GB user equipment may be divided into one collision area and one non-collision area, as shown in FIG. 5. In still some other embodiments, all areas of the GB user equipment may be divided into two collision areas and one non-collision area, as shown in FIG. 6. In FIG. 3 to FIG. 6, boxes in a gray shadow area indicate the GF user equipment group (for example, areas corresponding to a GF user group 1 or a GF user group 2), and all boxes indicate areas corresponding to the GB user equipment. Therefore, it can be learned that in boxes in gray shadow areas, the collisions from the two GF user equipment groups are encountered on the time-frequency resource of the GB user equipment.

The non-collision area may still use original $V_{gb,1}$ as the transmitting weight. For the collision area, $V_{gb,2}$ of the GB user equipment needs to be determined based on information about all the GF user equipments in the area, to minimize interference caused to the GF user equipments in the area when the GB user equipment performs sending.

A second weight in a collision area i (indicating the $i^{th}$ collision area) is $V_{gb,2}(i)$. There may be a plurality of solutions for design. Specifically, in some embodiments, the second weight may be a transmitting weight based on a codebook codebook. A codebook that has a low correlation with the information about the GF user equipment is selected based on information (such as SRIs and TPMIs) about the GF user equipment and the GB user equipment from numerous uplink transmission codebooks determined by a system, to perform sending. The codebook that has the low correlation with the information about the GF user equipment is, for example, another codebook different from a codebook used by the GF user equipment.

In some other embodiments, the second weight $V_{gb,2}(i)$ may be a transmitting weight based on a non-codebook non-codebook. A determined non-codebook weight is jointly calculated based on the information (such as the SRI) about the GF user equipment and the GB user equipment. A feedback manner of a non-codebook weight in NR is used as an example. A UE k calculates a plurality of non-codebook weights $V_{k,nc}(i)$, namely, non-codebook weights, by using a CSI-RS, and feeds back the plurality of non-codebook weights $V_{k,nc}(i)$ to the base station side by using an SRS. An equivalent SRS channel factor received by the base station side is $\overline{H}_{k,srs}(i) = H_{k,srs} \times V_{k,nc}(i)$. The base station side may select, based on the GB user $\overline{H}_{gb,srs}(i)$ and an equivalent channel factor $\overline{H}_{gf,srs}(j)$ that is of the non-codebook weights and that is determined by the GF user, a weight $V_{gb,nc}(i)$ with a minimum correlation $\underset{i}{\arg\min} \left\| \overline{H}_{gb,srs}^{H}(i) \overline{H}_{gf,srs}(j) \right\|$ i to perform sending, and the base station only needs to feed back a corresponding weight indication i to the UE. A calculation process of the second weight $V_{gb,2}(i)$ is a specific example of the non-codebook-based design solution of the first precoding information. It can be learned from the foregoing examples that a first communication apparatus may determine the first precoding information based on a non-codebook weight that is determined by a first terminal device and that enables a correlation between an equivalent channel factor of the first terminal device and an equivalent channel factor of a second terminal device to be minimum.

In still some other embodiments, the second weight $V_{gb,2}(i)$ may be a hybrid weight, and the hybrid weight is an example of hybrid precoding information. Specifically, on the base station side, a weight $V_{outer}(i)$ may be calculated on the basis of $V_{gb,1}$ by using the information (such as the SRI) about the GF. For a calculation process, refer to the foregoing specific example of the design solution of the first precoding information based on the non-codebook. Assuming that $V_{gb,2}(i) = V_{outer}(i)$, the base station indicates a weight $V_{outer}(i)$ to the UE, and on the UE side, the UE may determine a final transmitting weight according to $V_{gb,1}$ and $V_{gb,2}(i)$, for example, $V_{gb,i} = V_{outer,i}V_{gb,1}(i)$.

Step 3: The base station delivers the first weight $V_{gb,1}$ and second weights $V_{gb,2}(i)$, $1 \leq i \leq N$ of all collision areas to the GB user by using signaling.

Based on the foregoing descriptions, the first weight serves as the default weight, that is, the second precoding information. An action area may not be indicated, but it needs to indicate that the second precoding information is the first weight. The second weight may serve as an area-specific weight, that is, the first precoding information, and a frequency band area (bandwidth, a start position, and the like) to which the second weight is applied needs to be indicated. If the second weight is a hybrid weight, a combination weight identity of the second weight further needs to be indicated, to facilitate UE identification and processing.

In some embodiments, signaling for the first weight and the second weight may be carried and delivered by using same signaling, or may be delivered by using different signaling at different moments. In some embodiments, the signaling may be delivered to the GB user by using downlink control information DCI (downlink control information).

On the UE side, in step 4, the GB user equipment parses signaling value information carried in the delivered DCI, and determines transmitting weights in different areas.

(1) When the weight is the first weight (the default weight), for all areas, $V_{gb,i} = V_{gb,1}$.
(2) When the weight is the second weight, replacement of $V_{gb,i} = V_{gb,2}(i)$ is implemented for an area based on a signaling indication.
(3) When the weight is the second weight and is the hybrid weight, replacement of $V_{gb,i} = V_{gb,2}(i)V_{gb,1}$ is implemented for an area based on a signaling indication.

Then, the weight is enabled to act on a corresponding transmit signal, that is,

$$t_{gb,i} = V_{gb,i}S_{gb,i}$$

$t_{gb,i}$ is an adjusted to-be-sent signal in the area i.

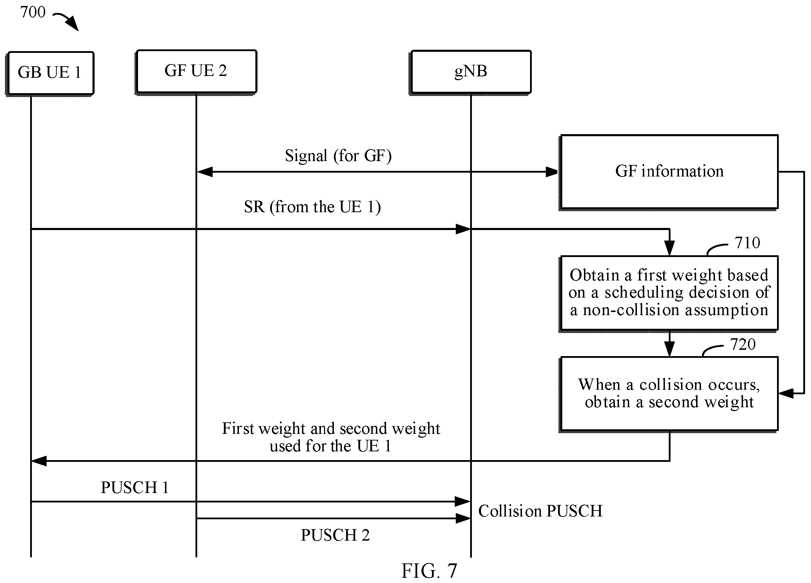

On the base station side, in step 5, the base station estimates an uplink channel based on a demodulation reference signal, and detects data. For a procedure 700 of Embodiment 1, refer to FIG. 7. As shown in FIG. 7, a UE 1 is an example of a grant-based first terminal device, a UE 2 is an example of a grant-free second terminal device, and GF information may be an example of grant-free configuration information of the second terminal device. When the gNB (an example of the base station) receives a scheduling request (SR) from the UE 1, the gNB obtains the first weight based on a scheduling decision of a non-collision assumption (710); and when a collision occurs, obtains the second weight (720). The first weight and the second weight are delivered by the gNB to the UE 1.

Embodiment 2

Embodiment 2 may be used for a scenario of processing GF preemption. A gNB appends information about a transmitting weight of GB in a collision area based on burst GF preemption information, and delivers the information about the transmitting weight of the GB in the collision area to a GB user equipment

Before this scenario occurs, a base station has determined a first weight $V_{gb,1}$ and a second weight $V_{gb,2}(i)$ (if existing) of the GB user equipment based on existing GB scheduling information and GF/GB collision information, and has delivered the first weight and the second weight to a UE by using signaling. The (group of) signaling is defined as signaling 1. For a specific procedure, refer to the descriptions of Embodiment 1. Then, the base station enters a GF/GB collision detection mode, and is ready to refresh and deliver a transmitting weight at any time based on a change. The UE parses weight DCI signaling delivered by the base station, determines transmitting weights in different areas, and then enters a listening mode to listen to whether new signaling for the weight exists.

On a base station side, in step 1, the base station monitors whether a new GF/GB collision occurs when the UE waits for sending; and if the new GF/GB collision does not occur, step 3 in Embodiment 2 is performed; or
if the new GF/GB collision occurs, the base station performs area division again based on new collision information and calculates a new second weight $V_{gb,2}(i)$. In some embodiments, the area division may be completely reset. In some other embodiments, minimum modification may be made based on an original area division solution to reduce a quantity of to-be-modified transmitting weights $V_{gb,2}(i)$. For a calculation process of $V_{gb,2}(i)$, refer to the related descriptions in Embodiment 1. After calculation is completed for all $V_{gb,2}(i)$, the base station may deliver, to the GB user equipment, carried information about new $V_{gb,2}(i)$ by using signaling 2. Same as the definition in Embodiment 1, the signaling 2 needs to include related information such as a weight attribute feature (the first weight, the second weight, a second combination weight, and the like) and a weight scope.

In some embodiments, the signaling 2 may be carried by DCI. As described above, signaling 2 that carries different $V_{gb,2}(i)$ may be delivered by using same DCI, or may be delivered on different time-frequency resources by using different DCI.

On a UE side, in step 2, the UE listens to information about the signaling 2 in a listening window period; and if the information about the signaling 2 is not detected in the listening period, data is sent based on existing weight information; or if the DCI of the signaling 2 is detected, the UE parses corresponding DCI to obtain the signaling 2, and adjusts a transmitting weight rule of a corresponding area based on an indication of the signaling 2.

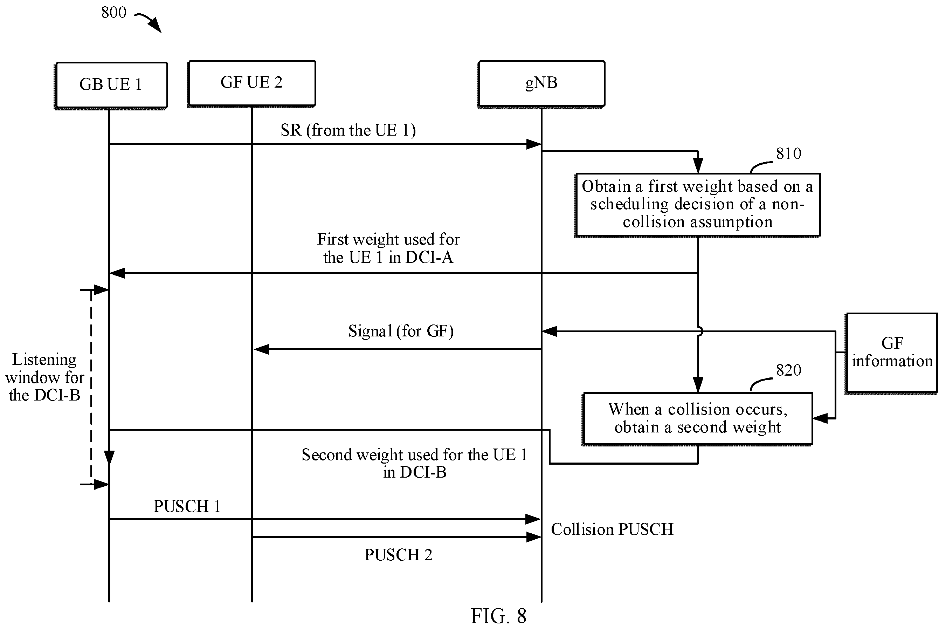

On the base station side, in step 3, the base station estimates an uplink channel based on a demodulation reference signal, and then detects data. For a procedure 800 of Embodiment 2, refer to FIG. 8. As shown in FIG. 8, a UE 1 is an example of a grant-based first terminal device, a UE 2 is an example of a grant-free second terminal device, and GF information may be an example of grant-free configuration information of the second terminal device. When the gNB (an example of the base station) receives a scheduling request (SR) from the UE 1, the gNB obtains the first weight based on a scheduling decision of a non-collision assumption (810), where the first weight may be sent by the gNB to the UE 1 by using the signaling 1 (for example, DCI-A); and when a collision occurs, a second weight is obtained (820). The second weight may be sent by the gNB to the UE 1 by using the signaling 2 (for example, DCI-B).

Embodiment 3

Embodiment 3 may be applied to a scenario in which transmission of a GF user equipment is canceled and a GF/GB collision ends. In this case, a base station cancels a transmitting weight in a collision area and delivers the transmitting weight to a GB user equipment. There are a plurality of reasons for canceling the transmission of the GF user equipment. For example, repeated transmission is already correct, and subsequent transmission is canceled; or for example, the GF user equipment switches to performing GB scheduling transmission after a plurality of times of transmission fail. In this case, the base station may obtain information indicating that the GF user equipment exits from occupying a resource, and may cancel a collision area corresponding to a GB user area by using signaling. It should be noted that for only a single GF user equipment, a scenario applicable to Embodiment 3 is that uplink transmission of the single GF user equipment is canceled. When the GF user equipment is a plurality of GF user equipments (that is, a GF user equipment group), a scenario applicable to Embodiment 3 is that uplink transmission of all the GF user equipments in the group is canceled.

Before this, the base station has completed configuration of an initial transmitting weight (a first weight and a second weight) of the GB user, and has notified the GB user by using signaling 1. Transmitting weights in different areas have been configured for the GB user based on the signaling 1. Then, the base station enters a detection period to detect a change of the GF/GB collision.

On a base station side, in step 1, when a UE waits for sending, if GF switches to scheduling in a collision area i, that is, a GF transmission mechanism is changed to a GB transmission mechanism, and a GF/GB collision no long occurs, $V_{gb,2}(i)$ is invalidated, and a default weight $V_{gb,1}$ is restored. The base station only needs to deliver position information of the collision area i and an invalidation instruction of a corresponding weight. The signaling is defined as signaling 3, and is carried by DCI and delivered to the GB user.

On a UE side, in step 2, the UE listens to the signaling 3; and if the signaling 3 is not detected in a listening period, data is sent based on existing weight information $V_{gb,2}(i)$; or if the signaling 3 is detected, the UE adjusts a weight in a corresponding area based on an indication of the signaling 3, and modifies the weight to $V_{gb,1}$.

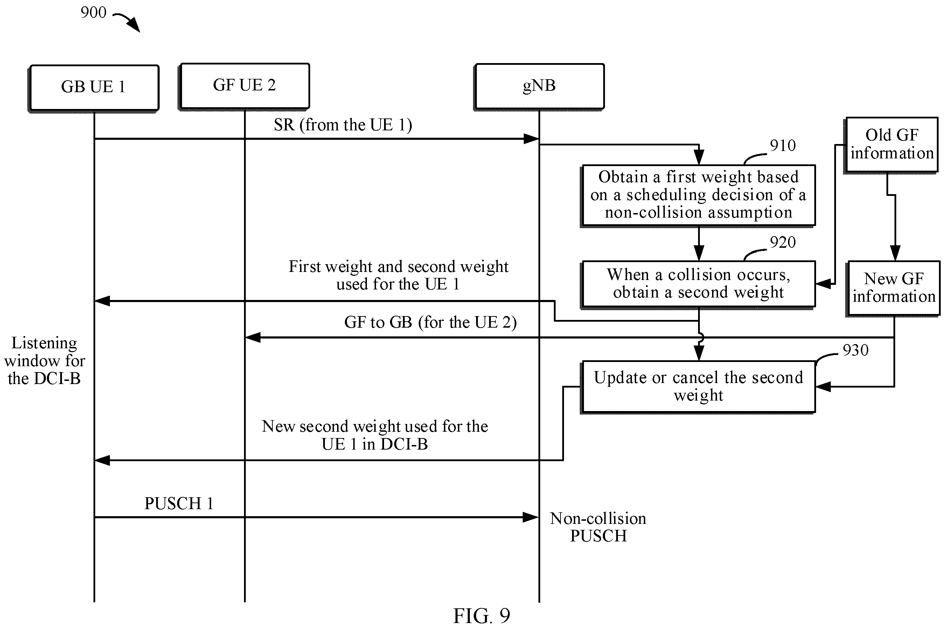

Refer to a procedure 900 in FIG. 9. As shown in FIG. 9, a UE 1 is an example of a grant-based first terminal device, a UE 2 is an example of a grant-free second terminal device, and GF information may be an example of grant-free configuration information of the second terminal device. When a gNB (an example of the base station) receives a scheduling request (SR) from the UE 1, the gNB obtains the first weight based on a scheduling decision of a non-collision assumption (910); and when a collision occurs, obtains the second weight (920), where the gNB delivers the first weight and the second weight to the UE 1. When there is new GF information, the gNB updates or cancels the second weight (930), and the gNB sends, to the UE 1 in DCI-B, a new second weight used for the UE 1.

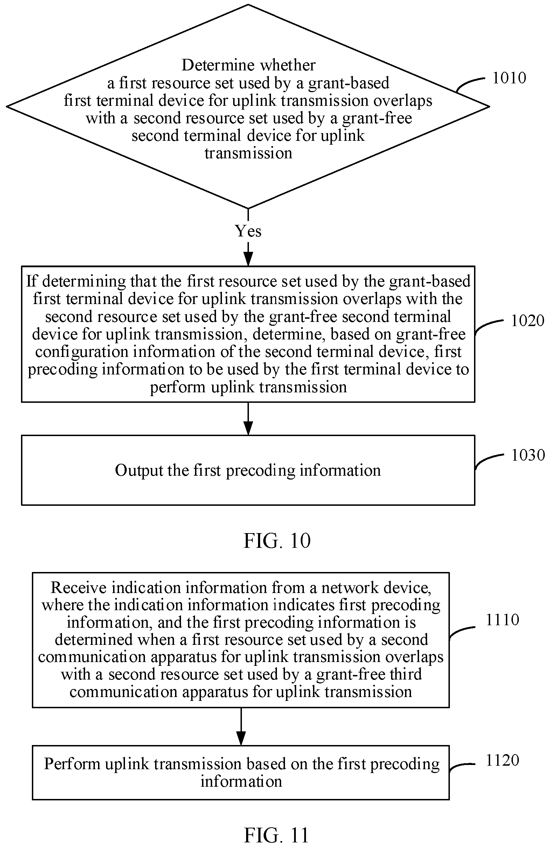

FIG. 10 is a flowchart of implementation at a first communication apparatus according to some embodiments of this disclosure. As shown in FIG. 10, a procedure 1000 of implementation at the first communication apparatus includes: The first communication apparatus determines whether a first resource set used by a grant-based first terminal device for uplink transmission overlaps with a second resource set used by a grant-free second terminal device for uplink transmission (1010); the first communication apparatus determines, based on determining that the foregoing overlapping exists and based on grant-free configuration information of the second terminal device, first precoding information to be used by the first terminal device to perform uplink transmission (1020); and the first communication apparatus outputs the first precoding information (1030).

FIG. 11 is a flowchart of implementation at a grant-based second communication apparatus according to some embodiments of this disclosure. As shown in FIG. 11, a procedure 1100 of implementation at the second communication apparatus includes: The grant-based second communication apparatus receives indication information from a network device, where the indication information indicates first precoding information, and the first precoding information is determined when a first resource set used by the second communication apparatus for uplink transmission overlaps with a second resource set used by a grant-free third communication apparatus for uplink transmission (1110); and the second communication apparatus performs uplink transmission based on the first precoding information (1120).

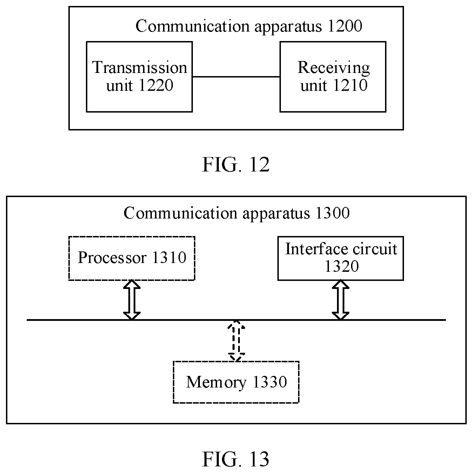

FIG. 12 is a diagram of a structure of a possible communication apparatus according to an embodiment of this disclosure. These communication apparatuses may implement functions of the first communication apparatus or the second communication apparatus in the foregoing method embodiments, and therefore can also achieve the beneficial effect of the foregoing method embodiments. In this embodiment of this disclosure, for example, for the terminal device 110 or 120 (referring to the first terminal device) that is shown in FIG. 1 and that serves as an example of a second communication apparatus, the communication apparatus may be, for example, a first terminal device, or may be a module (like a chip) used in a first terminal device 110 or 120.

An example in which the communication apparatus implements the functions of the second communication apparatus is used. As shown in FIG. 12, the communication apparatus 1200 includes a receiving unit 1210 and a transmission unit 1220. The communication apparatus may be configured to implement a function of the second communication apparatus in the method embodiment shown in FIG. 11 or the second communication apparatus (the first terminal device) shown in FIG. 2. In some embodiments, the transmission unit 1220 may be a transmitter, and the receiving unit 1210 may be a receiver.

When the communication apparatus 1200 is configured to implement the function of the second communication apparatus (the first terminal device) in the method embodiment shown in FIG. 2, the receiving unit 1210 is configured to receive indication information from a network device, where the indication information indicates first precoding information, and the first precoding information is determined when a first resource set used by the second communication apparatus for uplink transmission overlaps with a second resource set used by a grant-free third communication apparatus for uplink transmission; and the transmission unit 1220 is configured to perform uplink transmission based on the first precoding information.

A case in which the communication apparatus implements the function of the first communication apparatus is similar to the foregoing descriptions, and is not described. In addition, for more detailed descriptions of the receiving unit 1210 and the transmission unit 1220, refer to the related descriptions in the foregoing method embodiments. Details are not described herein again.

As shown in FIG. 13, a communication apparatus 1300 includes an interface circuit 1320. Optionally, a processor 1310 may be further included. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data needed by the processor 1310 to run the instructions, or store data generated after the processor 1310 runs the instructions.

When the communication apparatus 1300 is configured to implement the method in the method embodiment in FIG. 11, the interface circuit 1320 is configured to perform a function of the foregoing receiving unit 1210 or the foregoing transmission unit 1220.

When the communication apparatus is a chip used in the terminal device 110 or 120 (when the terminal device 110 or 120 is a first terminal device), the chip in the terminal device implements a function of the terminal device 110 or 120 in the foregoing method embodiment. The chip in the terminal device receives information from another module (for example, a radio frequency module or an antenna) in the terminal device 110 or 120, where the information may be sent by another terminal device 110 or 120. Alternatively, the chip in the terminal device sends information to another module (for example, a radio frequency module or an antenna) in the terminal device 110 or 120, where the information is sent to another terminal device 110 or 120.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application provides a communication system. The communication system may include the communication apparatus in the embodiment shown in FIG. 12, for example, a terminal device 110 or 120. Optionally, the terminal device 110 or 120 in the communication system may perform the communication method shown in FIG. 11. In some other embodiments, the communication system may include a communication apparatus that may perform the communication method shown in FIG. 10, for example, a network device 130.

An embodiment of this application further provides a circuit. The circuit may be coupled to a memory, and may be configured to perform a procedure related to the terminal device 110 or 120, or the network device 130 in any one of the foregoing method embodiments. A chip system may include a chip, and may further include another component like a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. By way of example rather than limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is the general-purpose processor, the DSP, the ASIC, the FPGA or the another programmable logic device, the discrete gate, the transistor logic device, or the discrete hardware component, the memory (a storage module) is integrated into the processor.

It should be noted that the memory described in this specification aims to include but is not limited to these memories and any memory of another suitable type.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a specific operating process of the foregoing system, apparatus, and module, refer to a corresponding process in the foregoing method embodiments. Details are not described herein again.

In the several embodiments provided in this application, it should be understood that the disclosed communication method and apparatus may be implemented in other manners. For example, the apparatus embodiments described above are merely examples. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The modules described as separate parts may or may not be physically separate, and parts displayed as modules may or may not be physical modules, may be located in one place, or may be distributed on a plurality of network units. A part or all of the units may be selected based on an actual requirement to achieve the objectives of the solutions in embodiments.

In addition, functional modules in embodiments of this application may be integrated into one processing module, or each of the modules may exist alone physically, or two or more modules are integrated into one module.

When the function is implemented in a form of a software functional module and sold or used as an independent product, the function may be stored in a computer-readable storage medium. Based on such an understanding, the technical solutions in this application essentially, or the part making contributions, or a part of the technical solutions may be implemented in a form of a software product. The computer software product is stored in a storage medium and includes several instructions for instructing a computer device (which may be a personal computer, a server, a network device 130 or 140, or the like) to perform all or a part of steps of the methods described in embodiments of this application. The computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk drive, or another optical disc storage or a disk storage medium, or another magnetic storage device, or any other medium that can carry or store expected program code in a form of an instruction or a data structure and can be accessed by the computer.

As used in this specification, the term "include" and similar terms should be understood as open inclusions, that is, "include but not limited to". The term "based on" should be understood as "at least partially based on". The term "an embodiment" or "the embodiment" should be understood as "at least one embodiment". Terms such as "first", "second", and the like may refer to different objects or a same object, and are merely used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this application, and are not intended to limit the protection scope of embodiments of this application. Any variation or replacement that a person skilled in the art can easily figure out within the technical scope disclosed in embodiments of this application shall fall within the protection scope of embodiments of this application. Therefore, the protection scope of embodiments of this application should be subject to the protection scope of the claims.

**Claims**

1. A communication method, comprising:

   when a first communication apparatus determines that a first resource set used by a grant-based first terminal device for uplink transmission overlaps with a second resource set used by a grant-free second terminal device for uplink transmission, determining, by the first communication apparatus based on grant-free configuration information of the second terminal device, first precoding information to be used by the first terminal device to perform uplink transmission; and
   outputting, by the first communication apparatus, the first precoding information.

2. The method according to claim 1, further comprising:

   assuming that the overlapping does not exist, determining, by the first communication apparatus, second precoding information to be used by the first terminal device to perform uplink transmission; and
   outputting, by the first communication apparatus, the second precoding information.

3. The method according to claim 2, wherein the outputting the second precoding information comprises one of the following:

outputting, by the first communication apparatus, the second precoding information by using signaling for outputting the first precoding information; or

outputting, by the first communication apparatus, the second precoding information by using signaling different from signaling for outputting the first precoding information.

4. The method according to any one of claims 1 to 3, wherein the determining first precoding information comprises:

determining, by the first communication apparatus, an overlapping area in the first resource set based on a time-frequency position of the second resource set; and

determining, by the first communication apparatus, the first precoding information for the overlapping area.

5. The method according to claim 4, wherein the determining an overlapping area comprises:

determining, by the first communication apparatus, that the first resource set also overlaps with a third resource set of a grant-free third terminal device; and

determining, by the first communication apparatus, an overlapping area set in the first resource set based on the time-frequency position of the second resource set and a time-frequency position of the third resource set, wherein the overlapping area belongs to the overlapping area set.

6. The method according to claim 5, further comprising:
determining, by the first communication apparatus, a first precoding information set used for each overlapping area in the overlapping area set, wherein the first precoding information belongs to the first precoding information set.

7. The method according to claim 6, wherein the outputting the first precoding information comprises:

sending the first precoding information set to the first terminal device; and

sending indication information to the first terminal device, wherein the indication information indicates an overlapping area corresponding to each piece of first precoding information in the first precoding information set.

8. The method according to claim 7, wherein the indication information comprises at least one of the following:

position information of a time-frequency resource corresponding to the overlapping area; or

an index of a time-frequency resource corresponding to the overlapping area.

9. The method according to any one of claims 1 to 8, wherein the determining first precoding information comprises:

determining, by the first communication apparatus in an uplink transmission codebook set based on the grant-free configuration information of the second terminal device, a codebook used by the second terminal device;

determining, by the first communication apparatus in the uplink transmission codebook set, another codebook different from the codebook; and

determining, by the first communication apparatus, the first precoding information based on the another codebook.

10. The method according to any one of claims 1 to 8, wherein the determining first precoding information comprises:

receiving, by the first communication apparatus, a non-codebook weight determined by the first terminal device and a non-codebook weight determined by the second terminal device; and

determining, by the first communication apparatus, the first precoding information based on the non-codebook weight that is determined by the first terminal device and that enables a correlation between an equivalent channel factor of the first terminal device and an equivalent channel factor of the second terminal device to be minimum.

11. The method according to claim 10, wherein the first precoding information is hybrid precoding information obtained by applying a weight to the second precoding information, and the outputting the first precoding information comprises:

sending, by the first communication apparatus, the weight to the first terminal device; and

sending, by the first communication apparatus, indication information to the first terminal device, wherein the indication information indicates that the first precoding information is the hybrid precoding information.

12. The method according to any one of claims 1 to 11, further comprising:

before the first terminal device performs uplink transmission, detecting, by the first communication apparatus, a change of a resource set that overlaps with the first resource set, and updating, based on grant-free configuration information of a terminal device corresponding to a changed resource set, the first precoding information to be used by the first terminal device to perform uplink transmission, wherein the changed resource set comprises one of the following: an updated second resource set; a resource set comprising the second resource set and the third resource set that is of the grant-free third terminal device and that also overlaps with the first resource set; or a resource set comprising the third resource set and an updated second resource set; and
outputting, by the first communication apparatus, updated first precoding information.

13. The method according to claim 12, wherein the updating the first precoding information comprises:

updating, by the first communication apparatus, the overlapping area set in the first resource set based on a time-frequency position of the changed resource set, wherein the overlapping area belongs to the overlapping area set; and
determining, by the first communication apparatus, the updated first precoding information based on an updated overlapping area set.

14. The method according to any one of claims 1 to 13, further comprising:
before the first terminal device performs uplink transmission, detecting, by the first communication apparatus, that the uplink transmission of the second terminal device is canceled, and sending, by the first communication apparatus to the first terminal device, indication information indicating that the first precoding information is invalidated.

15. A communication method, comprising:

receiving, by a grant-based second communication apparatus, indication information from a network device, wherein the indication information indicates first precoding information, and the first precoding information is determined when a first resource set used by the second communication apparatus for uplink transmission overlaps with a second resource set used by a grant-free third communication apparatus for uplink transmission; and
performing, by the second communication apparatus, uplink transmission based on the first precoding information.

16. The method according to claim 15, wherein the first precoding information is determined based on grant-free configuration information of the third communication apparatus.

17. The method according to claim 15 or 16, wherein the indication information further indicates an overlapping area that is in the first resource set and that corresponds to the first precoding information.

18. The method according to claim 17, wherein the performing uplink transmission comprises:
in the overlapping area, performing, by the second communication apparatus, uplink transmission by using the first precoding information.

19. The method according to claim 17, further comprising:

receiving, by the second communication apparatus, second precoding information from the network device; and
in a non-overlapping area in the first resource set other than the overlapping area, performing, by the second communication apparatus, uplink transmission by using the second precoding information.

20. The method according to claim 19, wherein

the indication information further indicates that the first precoding information is hybrid precoding information obtained by applying a weight to the second precoding information; and
the indication information indicates the first precoding information by indicating the weight.

21. The method according to claim 19, wherein the receiving second precoding information comprises:
receiving, by the second communication apparatus, the second precoding information by using signaling for receiving the first precoding information or other signaling.

22. The method according to any one of claims 17 to 21, further comprising:

    before performing uplink transmission, receiving, by the second communication apparatus, updated overlapping precoding information and indication information of a corresponding updated overlapping area from the network device; and
    performing, by the second communication apparatus, uplink transmission in the updated overlapping area based on the updated overlapping area.

23. The method according to any one of claims 17 to 22, wherein the indication information comprises at least one of the following:

    position information of a time-frequency resource corresponding to the overlapping area; or
    an index of a time-frequency resource corresponding to the overlapping area.

24. The method according to any one of claims 19 to 22, further comprising:

    before performing uplink transmission, receiving, by the second communication apparatus, indication information indicating that the first precoding information is invalidated; and
    in the overlapping area, performing, by the second communication apparatus, uplink transmission by using the second precoding information.

25. A first communication apparatus, comprising:

    a processing unit, configured to: when determining that a first resource set used by a grant-based first terminal device for uplink transmission overlaps with a second resource set used by a grant-free second terminal device for uplink transmission, determine, based on grant-free configuration information of the second terminal device, first precoding information to be used by the first terminal device to perform uplink transmission; and
    an output unit, configured to output the first precoding information.

26. The apparatus according to claim 25, wherein the processing unit is further configured to:

    assuming that the overlapping does not exist, determine second precoding information to be used by the first terminal device to perform uplink transmission; and
    the output unit is further configured to output the second precoding information.

27. The apparatus according to claim 26, wherein the input unit is further configured to perform one of the following:

    outputting the second precoding information by using signaling for outputting the first precoding information; or
    outputting the second precoding information by using signaling different from signaling for outputting the first precoding information.

28. The apparatus according to any one of claims 25 to 27, wherein the processing unit is further configured to:

    determine an overlapping area in the first resource set based on a time-frequency position of the second resource set; and
    determine the first precoding information for the overlapping area.

29. The apparatus according to claim 28, wherein the processing unit is further configured to determine the overlapping area in the following manners:

    determining that the first resource set also overlaps with a third resource set of a grant-free third terminal device; and
    determining an overlapping area set in the first resource set based on the time-frequency position of the second resource set and a time-frequency position of the third resource set, wherein the overlapping area belongs to the overlapping area set.

30. The apparatus according to claim 29, wherein the processing unit is further configured to:
determine a first precoding information set used for each overlapping area in the overlapping area set, wherein the first precoding information belongs to the first precoding information set.

31. The apparatus according to claim 30, wherein the input unit is configured to output the first precoding information in the following manners:

sending the first precoding information set to the first terminal device; and
sending indication information to the first terminal device, wherein the indication information indicates an overlapping area corresponding to each piece of first precoding information in the first precoding information set.

32. The apparatus according to claim 31, wherein the indication information comprises at least one of the following:

position information of a time-frequency resource corresponding to the overlapping area; or
an index of a time-frequency resource corresponding to the overlapping area.

33. The apparatus according to any one of claims 25 to 32, wherein the processing unit is configured to determine the first precoding information in the following manners:

determining, in an uplink transmission codebook set based on the grant-free configuration information of the second terminal device, a codebook used by the second terminal device;
determining, in the uplink transmission codebook set, another codebook different from the codebook; and
determining the first precoding information based on the another codebook.

34. The apparatus according to any one of claims 25 to 32, wherein the processing unit is configured to determine the first precoding information in the following manners:

receiving a non-codebook weight determined by the first terminal device and a non-codebook weight determined by the second terminal device; and
determining the first precoding information based on the non-codebook weight that is determined by the first terminal device and that enables a correlation between an equivalent channel factor of the first terminal device and an equivalent channel factor of the second terminal device to be minimum.

35. The apparatus according to claim 34, wherein the first precoding information is hybrid precoding information obtained by applying a weight to the second precoding information, and the input unit outputs the first precoding information in the following manners:

sending the weight to the first terminal device; and
sending indication information to the first terminal device, wherein the indication information indicates that the first precoding information is the hybrid precoding information.

36. The apparatus according to any one of claims 25 to 35, wherein the processing unit is further configured to:

before the first terminal device performs uplink transmission, detect a change of a resource set that overlaps with the first resource set, and update, based on grant-free configuration information of a terminal device corresponding to a changed resource set, the first precoding information to be used by the first terminal device to perform uplink transmission, wherein the changed resource set comprises one of the following: an updated second resource set; a resource set comprising the second resource set and the third resource set that is of the grant-free third terminal device and that also overlaps with the first resource set; or a resource set comprising the third resource set and an updated second resource set; and
the output unit is further configured to output updated first precoding information.

37. The apparatus according to claim 36, wherein the processing unit is further configured to update the first precoding information in the following manners:

updating the overlapping area set in the first resource set based on a time-frequency position of the changed resource set, wherein the overlapping area belongs to the overlapping area set; and
determining the updated first precoding information based on an updated overlapping area set.

38. The apparatus according to any one of claims 25 to 37, wherein the processing unit is further configured to: before the first terminal device performs uplink transmission, detect that the uplink transmission of the second terminal device is canceled; and

before the first terminal device performs uplink transmission, the processing unit detects that the uplink transmission of the second terminal device is canceled, and the output unit is further configured to send, to the first terminal device, indication information indicating that the first precoding information is invalidated.

39. A second communication apparatus, comprising:

a receiving unit, configured to receive indication information from a network device, wherein the indication information indicates first precoding information, and the first precoding information is determined when a first resource set used by the second communication apparatus for uplink transmission overlaps with a second resource set used by a grant-free third communication apparatus for uplink transmission; and

a transmission unit, configured to perform uplink transmission based on the first precoding information.

40. The apparatus according to claim 39, wherein the first precoding information is determined based on grant-free configuration information of the third communication apparatus.

41. The apparatus according to claim 39 or 40, wherein the indication information further indicates an overlapping area that is in the first resource set and that corresponds to the first precoding information.

42. The apparatus according to claim 41, wherein the transmission unit is further configured to:
in the overlapping area, perform, by the second communication apparatus, uplink transmission by using the first precoding information.

43. The apparatus according to claim 41, wherein the receiving unit is further configured to:

receive second precoding information from the network device; and

in a non-overlapping area in the first resource set other than the overlapping area, perform uplink transmission by using the second precoding information.

44. The apparatus according to claim 43, wherein

the indication information further indicates that the first precoding information is hybrid precoding information obtained by applying a weight to the second precoding information; and

the indication information indicates the first precoding information by indicating the weight.

45. The apparatus according to claim 43, wherein the receiving unit is configured to receive the second precoding information in the following manner:

receiving the second precoding information by using signaling for receiving the first precoding information or other signaling.

46. The apparatus according to any one of claims 41 to 45, wherein the receiving unit is further configured to:

before uplink transmission is performed, receive updated overlapping precoding information and indication information of a corresponding updated overlapping area from the network device; and

the transmission unit is further configured to perform uplink transmission in the updated overlapping area based on the updated overlapping area.

47. The apparatus according to any one of claims 41 to 46, wherein the indication information comprises at least one of the following:

position information of a time-frequency resource corresponding to the overlapping area; or

an index of a time-frequency resource corresponding to the overlapping area.

48. The apparatus according to any one of claims 43 to 46, wherein the receiving unit is further configured to:

before uplink transmission is performed, receive indication information indicating that the first precoding information is invalidated; and

if the receiving unit receives the indication information indicating that the first precoding information is invalidated, the transmission unit is further configured to: in the overlapping area, perform uplink transmission by using the second precoding information.

49. A communication apparatus, comprising a processor and a memory storing instructions, wherein when the instructions are executed by the processor, the method according to any one of claims 1 to 14 or any one of claims 15 to 24 is performed.

50. A computer-readable storage medium, wherein the computer-readable storage medium stores instructions, and when the instructions are executed, the method according to any one of claims 1 to 14 or any one of claims 15 to 24 is performed.

51. A computer program product, wherein the computer program product comprises instructions, and when the instructions are executed, the method according to any one of claims 1 to 14 or any one of claims 15 to 24 is performed.

FIG. 1

200

First communication apparatus

Second communication apparatus

210

When determining that a first resource set used by the grant-based second communication apparatus for uplink transmission overlaps with a second resource set used by a grant-free third communication apparatus for uplink transmission, determine, based on grant-free configuration information of the third communication apparatus, first precoding information to be used by the second communication apparatus to perform uplink transmission

205: First precoding information

220

230

240

Perform uplink transmission based on the first precoding information

FIG. 2

Time
domain

Frequency
domain

GB user

GF user group 2

GF user group 1

FIG. 3

Collision
area 2

Collision
area 1

GB user

GF user group 2

GF user group 1

FIG. 4

Non-collision
area 1

Collision
area 1

GB user

GF user group 2

GF user group 1

FIG. 5

FIG. 6

| GB UE 1 | GF UE 2 | gNB |
|---|---|---|

Signal (for GF)

GF information

SR (from the UE 1)

710

Obtain a first weight based on a scheduling decision of a non-collision assumption

720

When a collision occurs, obtain a second weight

First weight and second weight used for the UE 1

PUSCH 1

Collision PUSCH

PUSCH 2

FIG. 7

FIG. 8

EP 4 611 322 A1

900

| GB UE 1 | GF UE 2 | | gNB |

SR (from the UE 1)

Old GF
information

910

Obtain a first weight based
on a scheduling decision of a
non-collision assumption

920

First weight and second weight
used for the UE 1

When a collision occurs,
obtain a second weight

New GF
information

GF to GB (for the UE 2)

Listening
window for
the DCI-B

930

Update or cancel the second
weight

New second weight used for the
UE 1 in DCI-B

PUSCH 1

Non-collision
PUSCH

FIG. 9

Determine whether
a first resource set used by a grant-based
first terminal device for uplink transmission overlaps
with a second resource set used by a grant-free
second terminal device for uplink
transmission

— 1010

Yes

If determining that the first resource set used by the grant-based
first terminal device for uplink transmission overlaps with the
second resource set used by the grant-free second terminal
device for uplink transmission, determine, based on grant-free
configuration information of the second terminal device, first
precoding information to be used by the first terminal device to
perform uplink transmission

— 1020

Output the first precoding information

— 1030

FIG. 10

Receive indication information from a network device,
where the indication information indicates first precoding
information, and the first precoding information is
determined when a first resource set used by a second
communication apparatus for uplink transmission overlaps
with a second resource set used by a grant-free third
communication apparatus for uplink transmission

— 1110

Perform uplink transmission based on the first precoding
information

— 1120

FIG. 11

Communication apparatus 1200

| Transmission unit 1220 | Receiving unit 1210 |

FIG. 12

Communication apparatus 1300

| Processor 1310 | Interface circuit 1320 |

Memory 1330

FIG. 13

# EP 4 611 322 A1

## INTERNATIONAL SEARCH REPORT

| International application No. |
|---|
| **PCT/CN2022/130716** |

| A. | CLASSIFICATION OF SUBJECT MATTER |
|---|---|

H04L27/00(2006.01)i; H04W16/14(2009.01)i; H04W72/04(2023.01)i

According to International Patent Classification (IPC) or to both national classification and IPC

| B. | FIELDS SEARCHED |
|---|---|

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNABS; CNTXT; VEN; CNKI; USTXT; WOTXT; EPTXT; ENTXT; ENTXTC; 3GPP: 华为, 基站, 终端, 冲突, 交叉, 交叠, 交集, 重叠, 免调度, 免授权, 无许可, 无准予, 配置, 权值, 权重, 通知, 下发, 预编码, 指示, HUAWEI, collision, overlap, configuration, indication, different, distinguish, eMBB, GB, GF, gNB, URLLC, grant free, grant base, inter-UE

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109479199 A (TELEFONAKTIEBOLAGET LM ERICSSON (PUBL)) 15 March 2019 (2019-03-15) <br> description, paragraphs [0005]-[0131], and figures 1-11 | 1-8, 12-19, 21-32, 36-43, 45-51 |
| X | VIVO. "Summary of UL Inter UE Tx Prioritization/Multiplexing" <br> *3GPP TSG RAN WG1 Meeting #95 R1-1814261*, 19 November 2018 (2018-11-19), <br> sections 1-5 | 1-8, 12-19, 21-32, 36-43, 45-51 |
| A | CN 113709774 A (PENG CHENG LABORATORY) 26 November 2021 (2021-11-26) <br> entire document | 1-51 |
| A | WO 2019132559 A1 (KT CORP.) 04 July 2019 (2019-07-04) <br> entire document | 1-51 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 June 2023** | **19 July 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/130716**

| Patent document cited in search report | | | Publication date (day/month/year) | Patent family member(s) | | | Publication date (day/month/year) |
|---|---|---|---|---|---|---|---|
| CN | 109479199 | A | 15 March 2019 | WO | 2018171326 | A1 | 27 September 2018 |
| | | | | EP | 3466140 | A1 | 10 April 2019 |
| | | | | EP | 3466140 | A4 | 15 January 2020 |
| | | | | EP | 3466140 | B1 | 26 October 2022 |
| | | | | US | 2020120511 | A1 | 16 April 2020 |
| | | | | US | 11057779 | B2 | 06 July 2021 |
| | | | | CA | 3056957 | A1 | 27 September 2018 |
| | | | | MX | 2019011121 | A | 05 November 2019 |
| | | | | EP | 4132179 | A1 | 08 February 2023 |
| CN | 113709774 | A | 26 November 2021 | None | | | |
| WO | 2019132559 | A1 | 04 July 2019 | None | | | |

Form PCT/ISA/210 (patent family annex) (July 2022)